# EUROPEAN PATENT SPECIFICATION

(11) **EP 2 308 633 B1**
(45) Date of publication and mention of the grant of the patent: **16.11.2011**
(21) Application number: 09380158.7
(22) Date of filing: 07.10.2009
(51) Int. Cl.: B23K 26/00

(54) **Fixing device for laser welding of electrical contacts in photovoltaic cells**
Fixiervorrichtung für Laserschweißen elektrischer Kontakte in Fotoelementen
Dispositif de fixation pour soudure au laser de contacts électriques dans des piles photovoltaïques

(43) Date of publication of application: 13.04.2011
(73) Proprietor: Asociación Industrial de Óptica, Color e Imagen - AIDO, 46980 Paterna (ES); Aplicaciones Técnicas de la Energia, S.L., 46440 Almusafes (Valencia) (ES)
(72) Inventor: Ramos de Campos, José Antonio, 46980 Paterna (Valencia) (ES); Sampedro Ortiz de Urbina, Jesús María, 46980 Paterna (Valencia) (ES); Daroqui Raga, Enrique, 46440 Almusafes (Valencia) (ES)
(74) Representative: Carvajal y Urquijo, Isabel

(56) References cited:
- EP-A2- 0 836 233
- WO-A1-98/31498
- WO-A1-03/098704
- US-A- 5 463 242

## Description

### Technical field of the invention

The present invention refers to the technical field of photovoltaic cells solar modules, particularly to devices used for laser welding of electrical contacts in said solar modules, and more particularly to the devices for fixing and pressing the tab of a photovoltaic cell solar module on the bus printed on the silicon wafers of each photovoltaic cell.

### Background of the invention

In the photovoltaic cell solar modules, the tab has the function of connecting the cells of the solar module. The tab is a thin metal ribbon of 100 to 200 microns in thickness and approximately 4 millimeters in width. It is basically made of an alloy of tin, silver, and lead, and has a low melting point due to the lead.

In order to connect the solar module cells, the tab is welded to the bus of each of the photovoltaic cells composing said panel. The laser welding of the tab of the photovoltaic cell solar modules, on the bus printed on the silicon wafer of each photovoltaic cell, requires a previous treatment of the parts to be welded.

Due to the fact that the heating and cooling process is very quickly it is necessary to secure the contact and provide a homogeneous junction between the two parts to be welded in order to ensure the quick energy transference from the tab, which is the material exposed to the laser radiation, to the bus printed on the silicon wafer.

Nowadays there already exist methods for fixing the solar module tab on the bus printed on the silicon wafer of each photovoltaic cell. However, these fixing methods that have been available so far, do not allow obtaining neither a homogeneous junction nor a total fixing of the tab to the photovoltaic cell bus during laser welding, because these fixing methods consist of a line of punches, pressing on certain points so as to achieve contact, which, however, generate hollows in the tab area placed between the points where pressure is applied. These hollows or small separations between the tab and the bus prevent the right energy transference from the tab to the bus, thus preventing the right welding of both elements. Furthermore, the silicon wafer where the bus is printed on is a fragile component, sensitive to high thermal gradients, thus at high point pressures, reason why the use of these punches to apply pressure, may damage it. Besides, the new legislation prohibits the use of lead as a compound in electrical devices, what rises the tab melting point and, in turn, the thermal gradient of the process, and thus, it is necessary a total efficiency in the tab-bus contact so as to guarantee the optimum energy transference between both of them, and also an accurate welding of them, which is not achieved with the fixing means available in the state of the art.

Therefore, it was desirable to have a fixing device that may achieve an efficient fixing between the tab and the bus while they are being welded, avoiding the existing inconveniences in the previous systems in the state of the art.

### Description of the invention

The present invention solves the existing problems in the state of the art by means of a fixing device for laser welding of electrical contacts in photovoltaic cells. This device homogeneously presses the tab in a photovoltaic cell solar module, on the bus printed on the silicon wafer of each photovoltaic cell composing said solar module, and fixes both elements during welding.

This fixing device has a sandwich-type assembly, formed in turn by two opaque and rigid plates, an upper and a lower one, placed one on top of the other. Each plate has at least one opening, being both plate openings equal to each other and coinciding in position, thus the upper plate openings correspond to those of the lower plate. Besides, the upper plate openings are covered by means of panels transparent to the laser wavelength emission.

Additionally there exist joining means of the upper plate on the lower layer that fix these plates one to the other and maintain the sandwich-type assembly closed.

A flexible and transparent to the laser wavelength laser emission membrane is placed between the two plates of the sandwich-type assembly, and at least one compressed air inlet, that injects compressed air to the flexible membrane, is connected to the sandwich-type assembly.

In this way, before starting the process of laser welding the tab to the bus, the silicon wafer with the printed bus, along with the tab, are inserted between the upper and the lower layers of the sandwich-type assembly, specifically on the flexible membrane, so that they are located between the flexible membrane and the upper layer.

Compressed air is injected through the inlets, which inflates the flexible membrane, in such a way that it is freely deformed through the lower plate openings, while it exerts an upward pressure on the silicon wafer, that is to say, towards the transparent panels of the upper plate, and fixes the tab to the printed bus in the silicon wafer of the photovoltaic cell.

Thus; once the tab is fixed to the bus, the laser beam to be used for welding goes through a focusing lens placed at the laser head, so that it converges towards the tab surface. Since the upper plate panels are transparent to the laser wavelength emission, it goes through said panels without damaging them, and directly falls on the tab surface thus welding it to the bus.

The fixing device object of the present invention allows making laser welding with wavelengths between 800nm and 1100nm, and allows welding tabs with or without lead content to photovoltaic cells with a thickness equal to or smaller than 0.6mm without fractures due to thermal gradients, and it also allows welding the junction by means of at least five welding points placed equidistantly from the edges.

### Description of the drawings

There follows a description of an embodiment of the invention that refers to a series of drawings which help understand better the invention and which is presented as an illustrative and non-limiting example thereof.
Figure 1 is a schematic view of the fixing and pressing means for laser welding of electrical contacts in photovoltaic cells of the state of the art.
Figure 2 is a perspective view of a fixing system object of the present invention.
Figure 3 is a cross-sectional view across the AA' line of the fixing system of figure 2.
Figure 4 shows a section of the fixing system of figure 3 in which the silicon wafer with the printed bus, and the tab placed between the plates at the moment of preparing it for welding have been included.

Reference is made in the figures to the following set of elements:
1. silicon wafer
2. photovoltaic cell bus
3. photovoltaic cell solar module tab
4. sandwich-type assembly
5. upper plate of the sandwich-type assembly
6. lower plate of the sandwich-type assembly
7. plate openings of the sandwich-type assembly
8. upper plate transparent panels of the sandwich-type assembly
9. plate union means of the sandwich-type assembly
10. flexible membrane
11. compressed air inlet

### Description of preferred embodiments of the invention

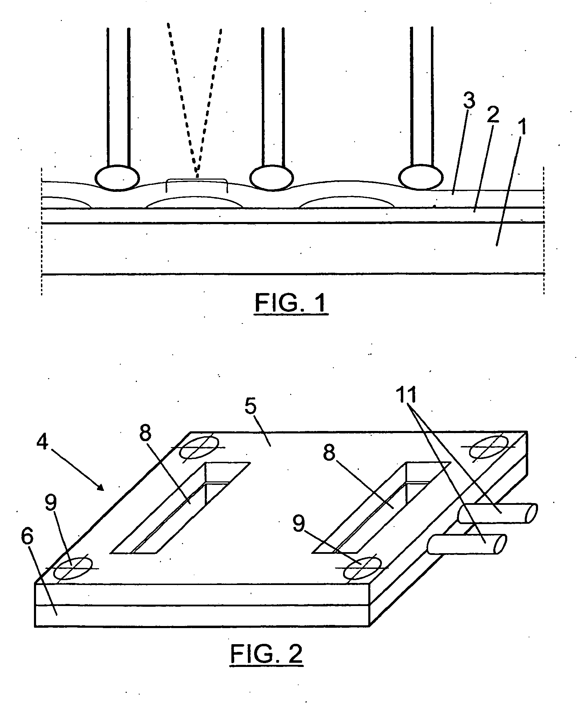

Figure 1 shows the fixing means used in the state of the art, and there it can be seen the main disadvantage of these means, the cavities or small separations between the tab and the bus of the photovoltaic cells.

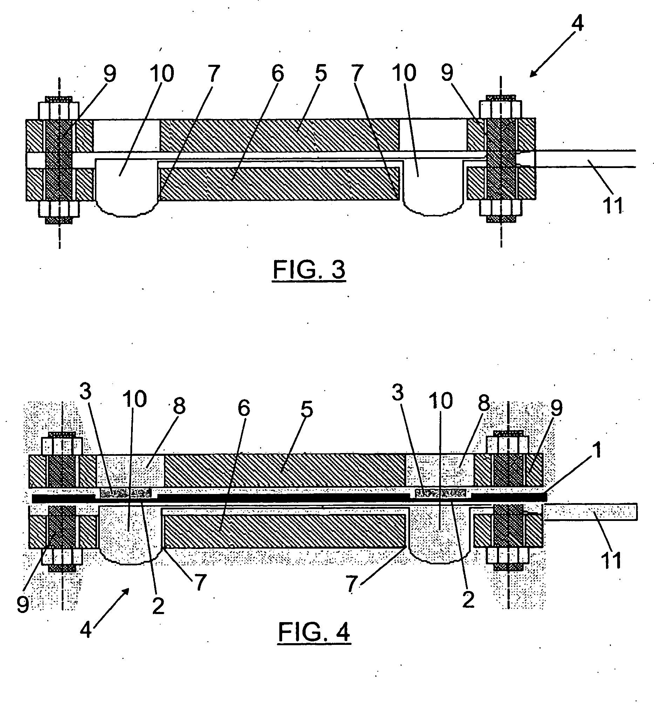

In order to solve the problems in the fixing system in the state of the art, the fixing device for laser welding of electrical contacts in photovoltaic cells object of the present invention is used, device which, as it can be seen in figure 4, homogeneously presses tab 3 in the photovoltaic cell solar module on bus 2 printed on the silicon wafer 1 of each photovoltaic cell, while they are being laser welded together.

As it can be seen in figures 2 to 4, the fixing device of the present invention has as sandwich-type assembly 4, which in turn is formed by an upper plate 5 and a lower plate 6, being both plates rigid and opaque, and being both plates joined together by union means 9, which particularly consist of four threaded rods placed at the sandwich-type assembly corners, and which allow for its opening and closing. The upper plate 5 is placed on the lower plate 6. Each plate 5, 6 has at least one opening 7, being the openings 7 of both plates 5, 6 equal to each other and having a coincident position.

Besides, the openings 7 of the upper plate 5 are covered by panels 8 transparent to the laser wavelength emission, a fact that allows for its passage through them. These transparent panels 8 of the upper plate 5 may be made of materials such as glass or acrylic material.

A flexible membrane 10, which is transparent to the laser wavelength emission, is placed between the two plates 5, 6 of the sandwich-type assembly 4. The flexible membrane 10 may be made of silicon, cured and polymerized EVA (ethylene-vinyl acetate) resin, or rubber, specifically latex.

As shown in the figures, there exists at least one compressed air inlet 11 placed in the sandwich-type assembly 4, being preferably two inlets 11, which inject compressed air to the flexible membrane 10.

Thus, before starting the process of laser welding the tab 3 of the solar module to the bus 2 of each photovoltaic cell, in order to fix both elements, the silicon wafer 1 with its printed bus 2, along with the tab 3, are inserted between the two plates 5, 6 of the sandwich-type assembly, on the flexible membrane 10, so that they are placed between said flexible membrane and the upper plate 5.

Once fixed in the desired position, compressed air is injected through the inlets 11, which inflates the flexible membrane 10, in such a way that it is freely deformed through the openings 7 of the lower plate 6, while it exerts an pressure on the silicon wafer 1 towards the transparent panels 8 of the upper plate 5, thus fixing the tab 3 to the bus on the silicon wafer 1 of the photovoltaic cell.

## Claims

1. Fixing device for laser welding of electrical contacts in photovoltaic cells, which in use homogeneously presses the tab (3) in the photovoltaic cell solar module on the bus (2) printed on the silicon wafer (1) of each photovoltaic cell, while they are being laser welded together, said device being **characterized in that** it has:
- a sandwich-type assembly (4), which in turn comprises
- an upper plate (5) and a lower plate (6), both rigid and opaque placed one onto the other, and each one of them comprising
- at least one opening (7), being the openings (7) of both plates (5, 6) equal to each other and having the same position, being said openings (7) of the upper plate (5) covered by means of
- panels (8) transparent to the laser wavelength emission.
- and union means (9) of the upper plate (5) on the lower layer (6),
- a flexible membrane (10) transparent to the laser wavelength emission placed between the two plates (5, 6) of the sandwich-type assembly (4),
- and at least one compressed air inlet (11) placed in the sandwich-type assembly (4), for the injection of compressed air into the flexible membrane (10), wherein in use the silicon wafer (1) is with the printed bus (2), along with the tab (3), between the two plates (5, 6) of the sandwich-type assembly (4), on the flexible membrane (10), and the compressed air injected through the inlet (11) inflating the flexible membrane (10), which freely deforms through the openings (7) of the lower plate (6), and exerting pressure on the silicon wafer (1) towards the transparent panels (8) of the upper plate (5), fixing the tab (3) to the bus (2) printed in the silicon wafer (1) of the photovoltaic cell.

2. Fixing device for laser welding of electrical contacts in photovoltaic cells, according to claim 1, **characterized in that** the transparent panels (8) of the upper plate (5) are made of a material selected from glass, acrylic material, and a combination thereof.

3. Fixing device for laser welding of electrical contacts in photovoltaic cells, according to any of the preceding claims, **characterized in that** the flexible membrane (10) is made of a material selected from silicones, cured and polymerized EVA resin, rubbers, and a combination thereof.

4. Fixing device for laser welding of electrical contacts in photovoltaic cells, according to any of the preceding claims, **characterized in that** the union means (9) of the upper plate (5) on the lower layer (6) comprise four threaded rods placed at the sandwich-type assembly (4) corners.

## Patentansprüche

1. Fixiervorrichtung zum Laserschweißen von elektrischen Kontakten in photovoltaischen Zellen, die bei Verwendung das Band (3) in dem Solarmodul der photovoltaischen Zelle gleichförmig auf den Bus (2) drückt, welcher auf der Siliziumscheibe (1) jeder photovoltaischen Zelle gedruckt ist, während diese mittels Laser untereinander geschweißt werden, wobei die genannte Vorrichtung **dadurch gekennzeichnet ist, dass** sie:
- eine sandwichartige Anordnung (4) aufweist, welche wiederum
- eine obere Platte (5) und eine untere Platte (6) umfasst, wobei beide steif und lichtundurchlässig sind und eine über die andere angebracht ist, wobei jede von diesen
- zumindest eine Öffnung (7) umfasst, wobei die Öffnungen (7) beider Platten (5, 6) gleich untereinander sind und dieselbe Stellung haben, wobei die genannten Öffnungen (7) der oberen Platte (5) mit
- Panelen (8) abgedeckt sind, welche durchsichtig für die Emission der Laserwellenlänge sind,
- und Verbindungsmittel (9) der oberen Platte (5) auf der unteren Schicht (6) umfasst,
- eine flexible Membran (10) aufweist, welche durchsichtig für die Emission der Laserwellenlänge ist und zwischen den beiden Platten (5, 6) der sandwicharfigen Anordnung (4) angebracht ist,
- und zumindest einen Drucklufteinlass (11) aufweist, welcher in der sandwicharfigen Anordnung (4) angebracht ist, zum Einblasen von Druckluft in der flexiblen Membran (10), in der bei Verwendung die Siliziumscheibe (1) mit dem gedruckten Bus (2), zusammen mit dem Band (3), sich zwischen den beiden Piaüen (5, 6) der sandwichartigen Anordnung (4), aut der tlexiblen Membran (10), befindet und die Druckluft durch den Einlass (11) eingeblasen wird, welche die flexible Membran (10) aufbläht, welche sich frei durch die Öffnungen (7) der unteren Platte (6) verformt, und einen Druck auf die Siliziumscheibe (1) zu den durchsichtigen Panelen (8) der oberen Platte (5) ausübt, welcher das Band (3) mit dem Bus (2), welcher in der Siliziumscheibe (1) der photovoltaischen Zelle gedruckt ist, fixiert.

2. Fixiervorrichtung zum Laserschweißen von elektrischen Kontakten in photovoltaischen Zellen nach Anspruch 1, **dadurch gekennzeichnet, dass** die durchsichtigen Panelen (8) der oberen Platte (5) aus einem Material, ausgewählt aus Glas, Acrylmaterial und einer Kombination derselben, gebildet sind.

3. Fixiervorrichtung zum Laserschweißen von elektrischen Kontakten in photovoltaischen Zellen nach einer der vorhergehenden Ansprüche, **dadurch gekennzeichnet, dass** die flexible Membran (10) aus einem Material, ausgewählt aus Silikonen, ausgehärtetem und polymerisiertem EVA-Harz, Kautschuken und einer Kombination derselben, gebildet ist.

4. Fixiervorrichtung zum Laserschweißen von elektrischen Kontakten in photovoltaischen Zellen nach einer der vorhergehenden Ansprüchen, **dadurch gekennzeichnet, dass** die Verbindungsmittel (9) der oberen Platte (5) auf der unteren Schicht (6) vier Gewindestangen umfassen, welche an den Ecken der sandwichartigen Anordnung (4) angebracht sind.

## Revendications

1. Dispositif de fixation pour soudage au laser de contacts électriques dans des cellules photovoltaïques, qui lors de son utilisation presse de manière homogène la languette (3) dans le module solaire de cellules photovoltaïques sur le bus (2) imprimé sur la plaquette de silicium (1) de chaque cellule photovoltaïque, pendant qu'elles sont soudées au laser ensemble, ledit dispositif étant **caractérisé en ce qu'**il possède :
- un ensemble de type sandwich (4), qui à son tour comprend
- une plaque supérieure (5) et une plaque inférieure (6), toutes deux rigides et opaques mises en place l'une sur l'autre, et comprenant chacun d'elles :
- au moins une ouverture (7), les ouvertures (7) des deux plaques (5, 6) étant identiques les unes par rapport aux autres et ayant la même position, lesdites ouvertures (7) de la plaque supérieure (5) étant recouvertes par
- des panneaux (8) transparents à l'émission de longueur d'onde laser,
- et des moyens d'union (9) de la plaque supérieure (5) sur la couche inférieure (6),
- une membrane flexible (10) transparente à l'émission de longueur d'onde laser mise en place entre les deux plaques (5, 6) de l'ensemble de type sandwich (4),
- et au moins une entrée d'air comprimé (11) mise en place dans l'ensemble de type sandwich (4), pour l'injection d'air comprimé dans la membrane flexible (10), où lors de son utilisation la plaque de silicium (1) se trouve avec le bus imprimé (2), le long de la languette (3), entre les deux plaques (5, 6) de ensemble de type sandwich (4), sur la membrane fiexible (10), l'air comprimé injecté à travers l'entrée (11) gonflant la membrane flexible (10), qui se déforme librement a travers les ouvertures (7) de la plaque inférieure (6), et exerçant de la pression sur la plaquette de silicium (1) vers les panneaux (8) transparents de la plaque supérieure (5), fixant la languette (3) au bus (2) imprimé dans la plaquette de silicium (1) de la cellule photovoltaïque.

2. Dispositif de fixation pour soudage au laser de contacts électriques dans des cellules photovoltaïques, selon la revendication 1, **caractérisé en ce que** les panneaux (8) transparents de la plaque supérieure (5) sont réalisés en une matière choisie parmi le verre, la matière acrylique et une combinaison de celles-ci.

3. Dispositif de fixation pour soudage au laser de contacts électriques dans des cellules photovoltaïques, selon l'une quelconque des revendications précédentes, **caractérisé en ce que** la membrane flexible (10) est réalisée en une matière choisie parmi les silicones, la résine EVA durcie et polymérisée, des caoutchoucs et une combinaison de celles-ci.

4. Dispositif de fixation pour soudage au laser de contacts électriques dans des cellules photovoltaïques, selon l'une quelconque des revendications précédentes, **caractérisé en ce que** les moyens d'union (9) de la plaque supérieure (5) sur la couche inférieure (6) comprennent quatre tiges filetées mises en place aux angles de l'ensemble de type sandwich (4).
